# EUROPEAN PATENT APPLICATION

(11) **EP 1 471 440 A2**
(43) Date of publication of application: **27.10.2004**
(21) Application number: 04006949.4
(22) Date of filing: 23.03.2004
(51) Int. Cl.: G06F 17/27

(54) **System and method for word analysis**

(30) Priority: 31.03.2003 US 403646
(71) Applicant: MICROSOFT CORPORATION, Redmond, WA 98052 (US)
(72) Inventor: Potter, Douglas W., Seattle, Washington 98133 (US); Huttenhower, Curtis E., Pittsburgh, PA 15217 (US); Tolle, Kristin M., Duvall, Washington 98019 (US); Powell, Kevin R., Kirkland, Washington 98034 (US)
(74) Representative: Grünecker, Kinkeldey, Stockmair & Schwanhäusser Anwaltssozietät

(57) **Abstract**

A computer implemented method of analyzing input text (12) includes comparing transitions in the input text (12) and the transition in a rule engine (22). The method also includes determining whether the transition in the input text (12) is found in the rule engine (22) based on a character found in a morpheme in the rule engine (22) and at least one of the input texts being associated with an inflected variation as a function of rules and a word boundary as a function of rules.

## Description

### BACKGROUND OF THE INVENTION

The present invention relates to language or text processing. More particularly, the present invention relates to an improved method and apparatus for analyzing input text.

Language or text processing encompasses many types of systems. For instance, parsers, spell checkers, grammar checkers, word breakers, morphological analyzers, natural language processors, and understanding systems are just a few of the types of systems that fall within this broad category.

Many of these systems are valuable in analyzing input text. For example, spell checkers compare words in input text to a dictionary, or lexicon, to determine if the input text corresponds to, or matches, words in the dictionary. An indication can be provided to a user that input text was not found in the dictionary, and, therefore, may be misspelled. Suggestions for correcting the misspelled word may also be provided. Spell checkers may also need to determine whether the input text corresponds to legitimate inflections of words in the dictionary and provide suggestions for misspelled words that are legitimate inflections of words in the dictionary.

Word breaking, or word segmentation, refers to the process of identifying individual words that make up an expression of language, such as in written text. Word segmentation is useful for checking spelling and grammar, synthesizing speech from text, speech recognition, information retrieval, and performing natural language parsing and understanding. Performing word segmentation of English text can be rather straight forward, because spaces and punctuation marks generally delimit individual words in the text. However, in other languages such as Chinese, word boundaries are implicit rather than explicit. Providing suggestions for word boundaries is thus valuable in language processing.

Morphology analyzers involve identifying a root form of a vocabulary word from a non-root form. For example, a morphological analysis of the word "running" would identify "run" as the root form. Morphological analyzers need to store a large amount of data for highly inflected languages to locate root forms. Once the root form is located, the root can be used for further processing, for example parsing or information retrieval.

In general, the systems described above are customized for various different languages including English, French, German, Spanish, Chinese, and Japanese. Furthermore, the complex nature of language analysis has confined the processes to be performed independently, which can be quite cumbersome. Thus, there is a need for a general purpose language processing system capable of providing various analyses of input text.

### SUMMARY OF THE INVENTION

One aspect of the present invention is a computer-implemented method of analyzing input text containing a plurality of transitions. For each of the plurality of transitions of input text, the method compares the transition of the input text with the transition in a rule engine. Then, a determination is made as to whether the transition in the input is found in the rule engine based on a character found in a morpheme in the rule engine and at least one of the input text being associated with an inflected variation as a function of rules, or a word boundary as a function of rules. If it is determined that the transition in the input text is not found in a transition in the rule engine, then the method may further suggest a possible transition in the rule engine and apply a cost to the possible transition.

The computer-implemented method provides an integrated and efficient way to provide spelling suggestions, morphological analysis, and word boundary candidates. Transitions in the rule engine are defined by various linguistic rules to provide the word analysis of input text.

Another aspect of the present invention is a system for providing word analysis of input text. The system includes a lexicon, an orthography rule module, and a morpheme combination module. The lexicon includes a plurality of free morphemes and bound morphemes. The orthography rule module defines transformations of the free morphemes to inflected variations. Also, the morpheme combination module defines allowable combinations of the free morphemes and the bound morphemes and the inflected variations and the bound morphemes. As a result, lexicons need only store the free and bound morphemes as transformations from inflected variations are defined in the orthography rule module. The lexicon may further include indications of word boundaries, semantic information, and syntactic information for each of the free morphemes and the allowable combinations of free morphemes and bound morphemes and inflected variations and bound morphemes.

### BRIEF DESCRIPTION OF THE DRAWINGS

FIG. 1 is a block diagram of a language or text processing system.
FIG. 2 is a block diagram of an exemplary environment for implementing the present invention.
FIG. 3 is a pictorial representation of a trie.
FIG. 4 is a block diagram of a rule engine according to the present invention.
FIG. 5 is an expression of a rule defining a transformation.
FIG. 6 is a method of providing word analysis according to an embodiment of the present invention.
FIG. 7 is a pictorial representation of traversing a rule engine.

### DETAILED DESCRIPTION OF ILLUSTRATIVE EMBODIMENTS

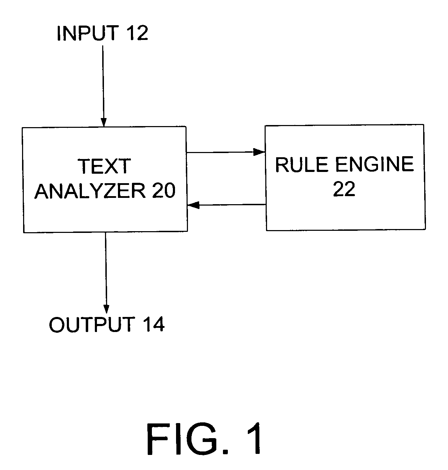

FIG. 1 generally illustrates a language or text processing system 10 that receives a language input 12, commonly in the form of a text string, and processes the language input 12 to provide a language output 14, also commonly in the form of a text string. For example, the language processing system 10 can be used in word processing, language parsing and/or information retrieval. The output 14 provided to these applications may be an indication of spell checking analysis, word breaking analysis, morphological analysis and/or combinations thereof. As appreciated by those skilled in the art, the language processing system 10 can be a stand-alone application, or a module or component accessible by or included in another system.

Generally, the language processing system includes a text analyzer 20 and a rule engine 22. The text analyzer 20 schematically represents components or modules that receive the input 12, access and obtain information from the rule engine 22 and process the word information to provide the output 14. One aspect of the present invention deals with an improved rule engine 22 for analyzing input text to identify morphemes, spelling errors, and word breaks. In view that the rule engine 22 is a separate component that can be used in many language processing systems and with many forms of text analyzers, general interaction of the text analyzer 20 with the rule engine 22 will be described, but specific details regarding the various forms of text analyzers will not be described, because such a description is not needed for an understanding of the present invention.

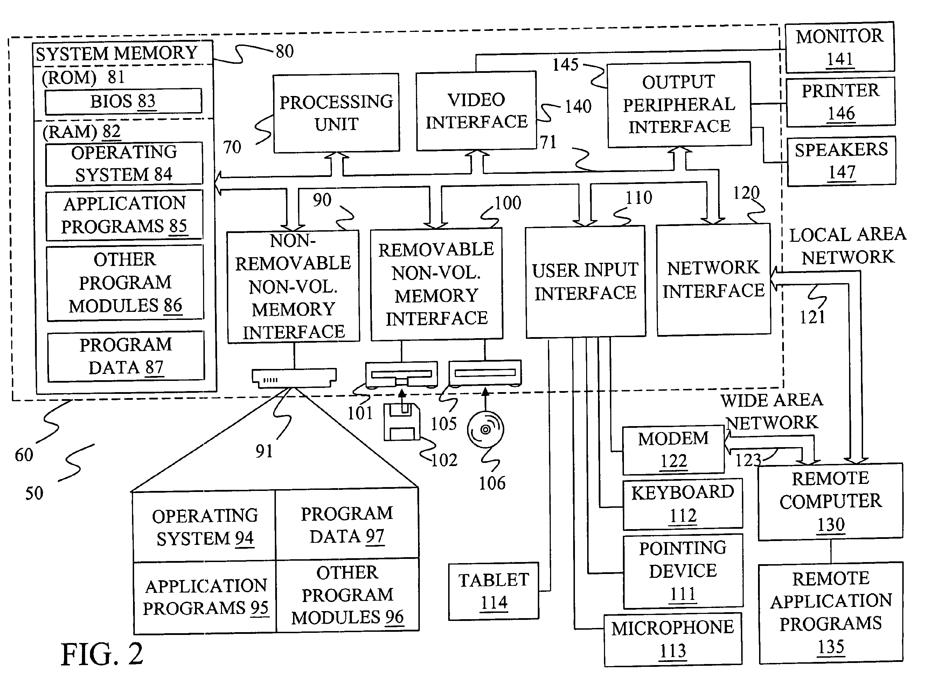

Prior to a further detailed discussion of the present invention, an overview of an operating environment may be helpful. FIG. 2 illustrates an example of a suitable computing system environment 50 on which the invention may be implemented. The computing system environment 50 is only one example of a suitable computing environment and is not intended to suggest any limitation as to the scope of use or functionality of the invention. Neither should the computing environment 50 be interpreted as having any dependency or requirement relating to any one or combination of components illustrated in the exemplary operating environment 50.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc., that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices. Tasks performed by the programs and modules are described below and with the aid of figures. Those skilled in the art can implement the description and figures as processor executable instructions, which can be written on any form of a computer readable media.

With reference to FIG. 2, an exemplary system for implementing the invention includes a general-purpose computing device in the form of a computer 60. Components of computer 60 may include, but are not limited to, a processing unit 70, a system memory 80, and a system bus 71 that couples various system components including the system memory to the processing unit 70. The system bus 71 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 60 typically includes a variety of computer readable media. Computer readable media can be any available media that can be accessed by computer 60 and includes both volatile and nonvolatile media and removable and non-removable media. By way of example, and not limitation, computer readable media may comprise computer storage media and communication media. Computer storage media includes both volatile and nonvolatile and removable and non-removable media implemented in any method or technology for storage of information such as computer readable instructions, data structures, program modules, or other data. Computer storage media includes, but is not limited to, RAM, ROM, EEPROM, flash memory, or other memory technology, CD-ROM, digital versatile disks (DVD), or other optical disk storage, magnetic cassettes, magnetic tape, magnetic disk storage, or other magnetic storage devices, or any other medium which can be used to store the desired information and which can be accessed by computer 60.

Communication media typically embodies computer readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, FR, infrared, and other wireless media. Combinations of any of the above should also be included within the scope of computer readable media.

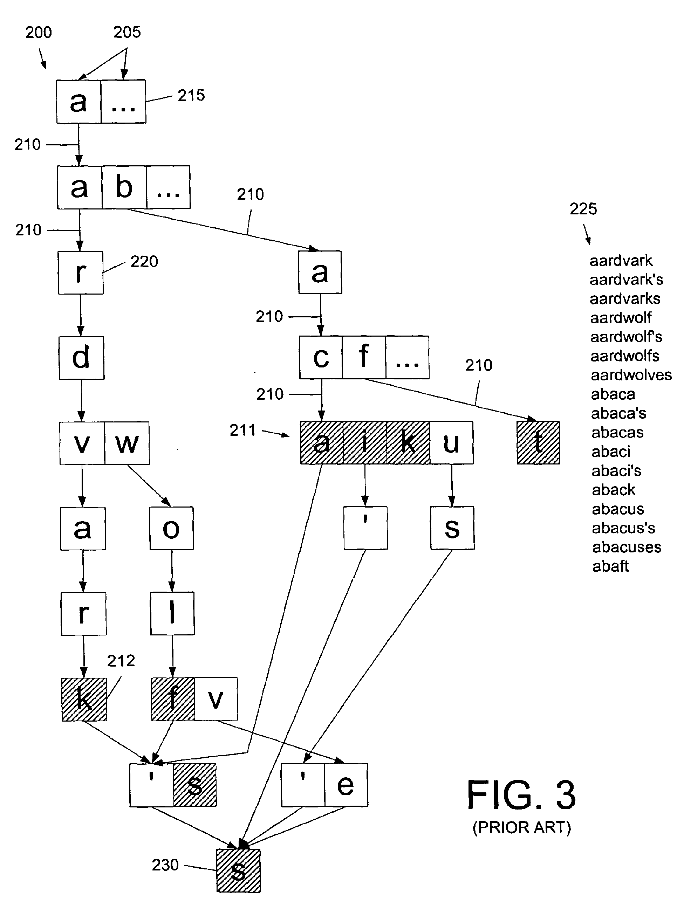

The system memory 80 includes computer storage media in the form of volatile and/or nonvolatile memory such as read only memory (ROM) 81 and random access memory (RAM) 82. A basic input/output system 83 (BIOS), containing the basic routines that help to transfer information between elements within computer 60, such as during start-up, is typically stored in ROM 81. RAM 82 typically contains data and/or program modules that are immediately accessible to and/or presently being operated on by processing unit 70. By way of example, and not limitation, FIG. 3 illustrates operating system 84, application programs 85, other program modules 86, and program data 87.

The computer 60 may also include other removable/non-removable volatile/nonvolatile computer storage media. By way of example only, FIG. 2 illustrates a hard disk drive 91 that reads from or writes to non-removable, nonvolatile magnetic media, a magnetic disk drive 101 that reads from or writes to a removable, nonvolatile magnetic disk 102, and an optical disk drive 105 that reads from or writes to a removable, nonvolatile optical disk 106 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 91 is typically connected to the system bus 71 through a non-removable memory interface such as interface 90, and magnetic disk drive 101, and optical disk drive 105 are typically connected to the system bus 71 by a removable memory interface, such as interface 100.

The drives and their associated computer storage media discussed above and illustrated in FIG. 2, provide storage of computer readable instructions, data structures, program modules, and other data for the computer 60. In FIG. 2, for example, hard disk drive 91 is illustrated as storing operating system 94, application programs 95, other program modules 96, and program data 97. Note that these components can either be the same as or different from operating system 84, application programs 85, other program modules 86, and program data 87. Operating system 84, application programs 85, other program modules 86, and program data 87 are given different numbers here to illustrate that, at a minimum, they are different copies.

A user may enter commands and information into the computer 60 through input devices such as a keyboard 112, a microphone 113, a handwriting tablet 114, and a pointing device 111, such as a mouse, trackball, or touch pad. Other input devices (not shown) may include a joystick, game pad, satellite dish, scanner, or the like. These and other input devices are often connected to the processing unit 70 through a user input interface 110 that is coupled to the system bus, but may be connected by other interface and bus structures, such as a parallel port, game port or a universal serial bus (USB). A monitor 141 or other type of display device is also connected to the system bus 71 via an interface, such as a video interface 140. In addition to the monitor, computers may also include other peripheral output devices such as speakers 147 and printer 146, which may be connected through an output peripheral interface 145.

The computer 60 may operate in a networked environment using logical connections to one or more remote computers, such as a remote computer 130. The remote computer 130 may be a personal computer, a hand-held device, a server, a router, a network PC, a peer device, or other common network node, and typically includes many or all of the elements described above relative to the computer 60. The logical connections depicted in FIG. 2 include a local area network (LAN) 121 and a wide area network (WAN) 123, but may also include other networks. Such networking environments are commonplace in offices, enterprise-wide computer networks, intranets, and the Internet.

When used in a LAN networking environment, the computer 60 is connected to the LAN 121 through a network interface or adapter 120. When used in a WAN networking environment, the computer 60 typically includes a modem 122 or other means for establishing communications over the WAN 123, such as the Internet. The modem 122, which may be internal or external, may be connected to the system bus 71 via the user input interface 110, or other appropriate mechanism. In a networked environment, program modules depicted relative to the computer 60, or portions thereof, may be stored in the remote memory storage device. By way of example, and not limitation, FIG. 2 illustrates remote application programs 135 as residing on remote computer 130. It will be appreciated that the network connections shown are exemplary and other means of establishing a communications link between the computers may be used.

It should be understood that the text analyzer 20 can reside on the computer 60 or any computer communicating with the computer 60 such as remote computer 130. Likewise, the rule engine 22 can reside on computer 60 in any of the storage devices described above, or be accessible through a suitable communications link.

In one embodiment, dictionary information for the present invention is stored in tries (also known as digital trees). There are a number of ways to represent a trie, such as representing the trie as a series of nodes. FIG 3. is an illustration of a trie data structure containing nodes of a trie 200 showing various words in a dictionary. Each node, for example nodes 205, represents a letter and may also include one or more flags. One of the flags may be an end-of-word flag, illustrated as a shaded node, such as node 212, in FIG. 3. Each node may also include down pointers 210 and right pointers to other nodes. Adjacent nodes are connected by right pointers, implicitly illustrated in FIG. 3 by nodes being adjacent each other. For example, nodes "a", "i", "k" and "u" at 211, which also forms a state. As referred to herein, a state (e.g., 211 or 215) is a series of nodes connected by right pointers.

In a complete dictionary, the top state 215 of the trie 200 is typically all the allowed first characters (ASCII or Unicode) of words in the dictionary, i.e., for English, the letters "A" through "Z". In FIG. 3, "..." represents other allowed nodes. The down pointer 210 from each node points to the first node in the next state of allowed following nodes, which typically comprises letters, but could also include punctuation and symbols such as "?". For example, at node 220, the first (and in this case the only) allowed letter is "r".

By following the possible transitions, or paths, the words in the list 225 may be reproduced. When a down pointer 210 is followed, the node that the down pointer 210 points to may be followed or any of the nodes to the right of that node may be followed. It should also be noted that every node has a down pointer or is a word end node (e.g., node 230). In fact, many nodes have a down pointer and also are word end nodes (e.g., node 212).

FIG. 3 also illustrates compression techniques used with tries, such as ending compression. For example, node 230 is pointed to from many different nodes. Thus, a single storage value or location may be used to represent the "s" stored in node 230. Tries and various compression techniques are well-established methods for representing and storing dictionaries and a detailed description is not necessary. It is worth noting that each of the inflections are included in this prior art embodiment, which leads to a large dictionary size. In some highly inflected languages, including all of the inflections in the dictionary or trie is impractical.

To visit all the nodes in a trie, and, hence, extract all of the words included in a trie, methods are well-known in the art for setting up an array of characters and filling each position in the array in succession. For example, the first position of the array is set to the first possible character; the next position is set to the next possible following character and so forth. Every instance of an end node means that a word in the trie, or a dictionary word, has been found.

It should be understood that in order to verify that a word is in the dictionary, or in order to spell check a word, the down pointer of a node needs to be followed only if the current letter in the node matched the letter of the user input. Input text is followed "in parallel" with the trie. A first pointer follows the input text, character by charter, while a second pointer follows the trie, node by node. If the input matches a dictionary word, it is determined that the input text is correct.

Rule engine 22 includes a trie in order to perform word analysis. In one embodiment of the present invention, the trie is embodied as a finite state transducer defining rules for traversing the trie according to various linguistic rules. The rules are stored separate from the trie. Using the various rules, rule engine 22 runs morphological analysis, checks spelling, and identifies candidate word breaks at each transition of the finite state transducer and provides an output indicative thereof. The rule engine 22 thus provides a fast and efficient method of word analysis.

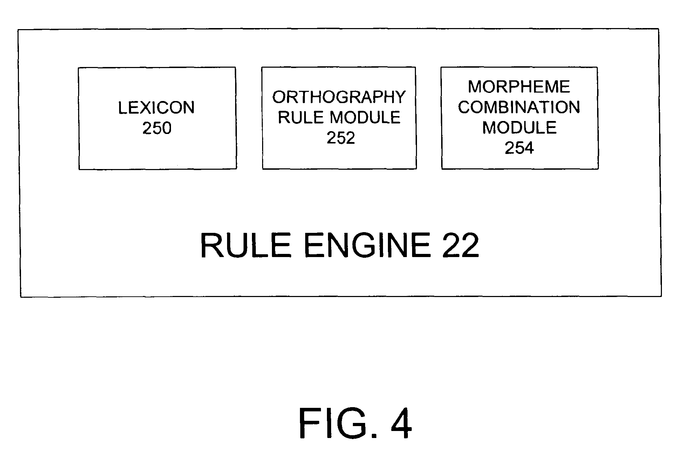

As illustrated in FIG. 4, rule engine 22 contains a number of components. The first component is a trie-based lexicon 250 containing both "free morphemes" (i.e. words such as happy, run, cat, etc.) and "bound morphemes" (i.e. affixes such as un, ness, ing, s, etc.). The free and bound word morphemes may be arranged in a trie as illustrated in FIG.3. Lexicon 250 is a data structure that contains information about the morphemes. For example, lexicon 250 may store indications of syntactic and semantic information. Indications may include whether a morpheme is a noun, verb or adjective. Indications for combinations of morphemes can also be provided. For example, lexicon 250 may include an indication that the morpheme "happy" is an adjective and "ness" is a suffix that transforms an adjective to a noun. Thus, the word "happiness" can be determined to be a noun although it is not necessary to have a separate entry.

Additionally, different types of linguistic information may be stored in the lexicon. This linguistic information may depend on the type of word analysis being performed. Storing information about words that will aid in parsing is one example of this type of information. Indications as to whether a word is a proper name or geographical location can also be useful.

Another component of rule engine 22 is orthography rule module 252. Orthography rule module 252 interacts with lexicon 250 and defines various rules to allow morphemes to be identified from input text. Accordingly, lexicon 250 only needs to store morphemes and not all of the inflected variations. Orthography rule module 252 operates under an analysis known as "two-level" morphology. Two-level morphology analysis includes a transformation of data from a surface level (i.e. input from a user) to a lexical level (i.e. parts of a word and various characteristics). For example, two levels morphology analysis transforms the user input of "happiness" to "happy", an adjective, and "ness", a suffix indicating various characteristics.

The orthography rules, developed by a linguist or person with similar skill set, define the transformations in the two-level morphology system. For example, the transformation from "happiness" to "happy + ness" is based on rules such as those shown in examples provided below. Each rule may be expressed by a "regular expression". The regular expressions include a core, an operator, and left and right contexts. The core is the mapping of characters for a particular rule. The operator dictates how the core interacts with the left and right contexts. The left and right contexts define characters that surround the core in order for the rule to apply.

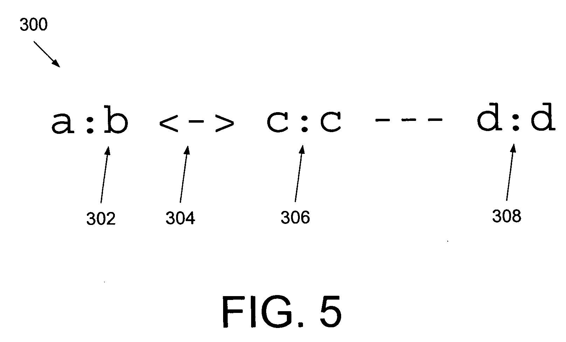

FIG. 5 illustrates an example of an expression 300. It should be noted the notation provided below is only exemplary. The expression 300 includes core 302, operator 304, left context 306, and right context 308. Core 302 is the primary character or characters over which the rule or mapping operates. Core 302 maps 'a' to 'b', which is represented as a:b. It is worth noting that the format "a:b" can be interpreted to mean "surface character 'a' may be mapped as lexical character 'b'". Expression 300 includes "---", which indicates where the map occurs. Operator 304 may be one of four options contained in table 1.

**TABLE 1**

| Operator | Function |
|---|---|
| <-> | The transformation must occur given the left and right contexts. No other characters are allowed. |
| - > | The transformation may occur in the given context. |
| <- | The transformation must occur for the given surface character given the left and right contexts, but other surface characters are allowed. |
| >< | The transformation cannot occur in the given context. |

Here, the operator 304 is '<->', which means that the transformation of core 302 (a:b) must occur given the left context 306 (c:c) and the right context 308 (d:d). Assuming a user enters "cad", the orthography expression 300 will establish that "cad" may also be legally expressed as "cbd".

The left context 306 and the right context 308 can contain surface and lexical characters, sets of characters (i.e. CONS for all consonants, VOWL for all vowels, etc.) or special meta-characters. Table 2 contains various meta-characters that are used.

**TABLE 2**

| Character | Meaning |
|---|---|
| * | Any character |
| - | Null character |
| + | Morpheme boundary |
| # | Word boundary |

The orthography rule module 252 provides options that are available when looking up a word in the lexicon. For example, given the input "happiness", the orthography rule module 252 maps 'i' to 'y' and finds morphemes "happy" and "ness" in the lexicon. A general representation of this expression may be made as:
i:y <-> CONS:CONS --- *:+

The expression indicates that a surface 'i' is mapped as a 'y' if and only if the mapping is preceded by a consonant mapped in the lexicon and followed by any character representing a morpheme boundary. Thus, as input of "happiness" is traversed through the lexicon, "hap" is mapped to "hap", 'p' is mapped to 'p' (which satisfies the left context CONS:CONS) and following the mapping of 'y' is a morpheme boundary, namely the boundary of the morpheme "happy".

Expressions may also be combined to indicate combination expressions. One combination operator is conjunction/union (||) and another is disjunction/intersection (&&). For example, the above rule expression may be combined to include the characters "qu" in the above rule expression. The resulting combination rule would be:
i:y <-> CONS:CONS --- *:+ || qu:qu --- *:+

Additionally, different operators may be used within the left and right contexts. Table 3 shows example operators.

**TABLE 3**

| Operator | Meaning |
|---|---|
| \| | A choice of one from a set (i.e. one of a:a\|b:b) |
| ? | Indicates zero or one occurrences of a character (i.e. a:a?) |
| * | Indicates zero or one occurrences of a character |
| + | Indicates one or more occurrences of a character |
| () | Grouping of sets (i.e. (a:b\|c:d)*) |
| \ | Literal characters |

Other examples of rule expressions are provided below. In the rule expressions, CONS is defined as any consonant, VOWL is defined as any vowel, SIB is defined as any sibilant consonant {s x z}, and VOW1 is defined as {e i o u y}.

For example, to map "fishes" to "fish+s" or "boxes" to "box+s", a morpheme boundary must surface as an 'e' only when preceded by an "sh", "ch", sibilant consonant or a 'y' surfaced as an 'i' and followed by an s. The following expression may be used:
e:+ <-> sh:sh | SIB:SIB | i:y --- s:s || ch:ch - - - s:s

To map bagged->bag+ed or bigger->big+er, a surface 'g' appears in the lexicon as a morpheme boundary when preceded by a consonant, a vowel, and a surface 'g' appearing in the lexicon as any character and followed by any character surfacing as a vowel or 'y'. The following expression may be used:
g:+ -> (CONS:CONS) VOWL:VOWL g:* --- VOW1:*|a:*

To map continuing->continue+ing, tying->tie+ing or reptilian->reptile+an, an 'e' must surface as a null character when either it is preceded by a consonant or any character surfacing as a 'u' and followed by a morpheme boundary surfacing as a null character and either an 'a' or an 'i', it is preceded by an 'i' surfacing as a y and followed by a morpheme boundary surfacing as a null character, or it is preceded by any character and followed by a morpheme boundary surfacing as 'i'. The following expression may be used:
- :e <-> CONS:CONS u:* --- -:+ a:a|i:i || y:i --- -:+ || *:* --- i:+

To map panicked->panic+ed and panicking->panic+ing, a morpheme boundary must surface as a 'k' only when either it is preceded by a vowel and a 'c' and followed by an 'e' or an 'y' or it is preceded by a vowel and a 'c' and followed by an 'i' and either an 'n', 'o' or an 'f'. The following expression may be used:
k:+ <-> VOWL:VOWL c:c --- e:e|y:y || VOWL:VOWL c:c --- i:i n:n|o:o|f:f

Rule engine 22 also includes morpheme combination module 254 that interacts with lexicon 250 to define allowable morpheme combinations. Any suitable data structure can be used to store such information. For example, the interaction may be lexical bits that are stored with each of the morphemes. The lexical bits may define various allowable inflections of root words. For example, the morpheme "happy" may be stored or otherwise associated with various indications that allow it to be combined with various suffixes such as "ness", "er", "est", and "ly". Additionally, the indications may identify combinations of "happy" with prefixes such as "un".

Using rule engine 22, a fast efficient method of performing word breaking, spell checking, and morphological analysis simultaneously is achieved. To perform word breaking, flags can be stored with the morphemes in lexicon 250 in order to indicate word boundaries. If both the user input and lexicon 250 match a word end, a candidate word end is identified. A user input pointer can then move to the next user input word. Additionally, a pointer to lexicon 250 is reinitialized to search for the next word.

Multiple word phrases may also be placed in lexicon 250 to allow recognition of phrases where a portion or all of the component portions of the phrase are not in a dictionary. One example of such a phrase is "Sri Lanka". Neither "Sri" nor "Lanka" are in the dictionary. Placing a word boundary after "Sri Lanka" allows the entire phrase to be recognized by rule engine 22, rather than just the portion "Sri" or "Lanka".

If the user input does not include word breaks (as in many Asian languages) candidate word breaks are identified according to various rules. A pointer to lexicon 250 is reinitialized after candidate word ends are found. If desired, probability data may be stored with each of the candidate word ends. After all candidate word breaks are identified, further analysis can be performed to further determine word breaks in the user input text.

In order to perform morphological analysis, morpheme boundary flags are added to the morphemes in lexicon 250. If morphemes in lexicon 250 are identified, the morphemes can be added to the morphological analysis. Morpheme combination module 254 identifies possible combinations of morphemes, so analysis can result from how the morphemes are combined.

To perform spelling correction, a method and system for cost computation may be used. A cost is computed for the difference between the user input and information in lexicon 250. If the user input and an entry in lexicon 250 match, the cost is zero. Otherwise, costs are computed for generating spelling suggestions for available transitions. When the cost a transition becomes too large, as defined by a threshold value, the transition is not further explored. An exemplary system and method for spell checking in accordance with an embodiment of the present invention is described in U.S. Pat. No. 6,131,102, entitled "Method and System for Cost Computation of Spelling Suggestions and Automatic Replacement", issued October 10, 2000, the content of which is hereby incorporated by reference in its entirety.

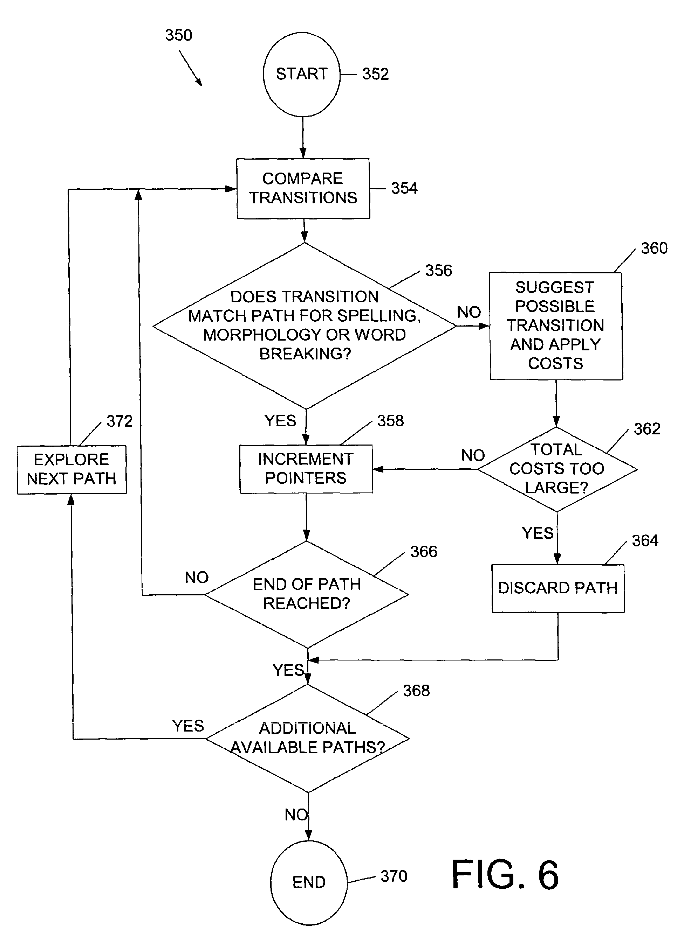

FIG. 6 illustrates a method for word analysis using rule engine 22. Rule engine 22 is a state machine including various transitions based on lexicon 250, orthography rule module 252, and morpheme combination module 254. Method 350 starts at step 352. At step 354, a transition in input text is compared with a transition in rule engine 22. For example, this transition may be compared as "h" in the input text and as "h:h" as the first character mapping of the morpheme "happy" in lexicon 250. After the transition is applied, a determination is made at step 356 as to whether the transition is found in the rule engine 22 for a path according to spelling, morphological or word breaking rules. If the transition matches, the method proceeds to step 358 wherein the pointers in rule engine 22 and user input are incremented. If the transition does not match, a possible transition is suggested and a penalty (cost) is applied to the possible transition at step 360. At step 362, it is determined whether the total costs for following the suggested path (transition) are too large. Multiple costs may need to be added if additional penalties have already been applied to the suggested path. If the costs are too large, the particular path is discarded at step 364. Accordingly, this path will not further be explored. If the costs are within an acceptable range, the method returns to step 358 and pointers in the input and rule engine 22 are incremented.

After the pointers are incremented, it is determined whether the end of the path has been reached. This determination is made at step 366. If additional transitions are contained in the user input, the method returns to step 354. If the end of the path is reached, a determination of whether there are additional available paths is made at step 368. After all of the paths have been explored, the method ends at step 370. If additional paths need to be explored, rule engine 22 will explore the next path at step 372 and apply a transition at step 354. The step of finding the next path at step 372 may involve moving backwards through rule engine 22 and applying an alternative transition or reinitializing rule engine 22 to analyze the next input word.

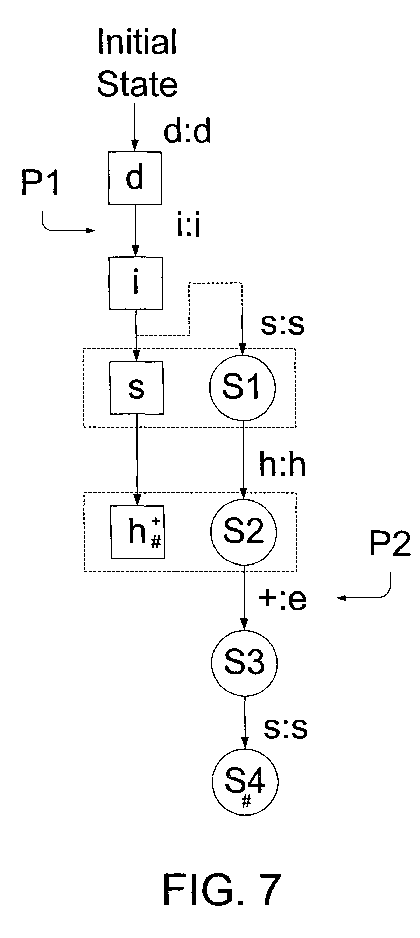

FIG. 7 illustrates an example of traversing rule engine 22 in order to provide simultaneous word breaking, spell checking, and morphological analysis according to method 350 in FIG. 6. A pointer in rule engine 22 begins at an initial state.

Assuming the input is "dishes", lexicon 250 is traversed to the first letter 'd' of the morpheme "dish". Next, a transition is followed to 'i' in lexicon 250. The "s:s" transition begins a transition that is governed by a rule, namely that the plural of a noun following "sh" can be mapped as "es". The transitions "s:s" and "h:h" follow rule engine 22 to reach state "S2". At state "S2" a morpheme boundary '+' and a word boundary '#' are reached for the letter 'h', so this character serves as a morpheme and a word boundary candidate. Orthography rule module 252 allows a transition in lexicon 250 from a morpheme boundary to an 'e', noted as "+:e". Also, morpheme combination module 254 allows the morpheme "dish" to be combined with 's', noted as the transition "s:s". The user input matches with the remaining transitions of "S3" and "S4". "S4" contains a word boundary flag indicating a matching word boundary in the user's input. Thus, after reaching state "S4", the spell checking has found no errors, the word breaking has determined that a word break occurs after "dishes" and the morphological analysis has identified the morphemes "dish" and "s". An output indicative of these analyses may then be provided.

If user input and lexicon 250 do not match, appropriate penalties are applied to traverse through lexicon 250. For example, if a user enters "deshes", a penalty "P1" will be applied to a suggested transition from 'd' to 'i'. Then, a suggestion of the correct word "dishes" can be made. If a user mistakenly enters "dishis", a penalty "P2" will be applied to the transition from state "S2" to "S3", namely "+:e". Likewise, a suggestion of "dishes" can be made and provided as an output. As discussed above, if the penalties become to large, transitions are not traversed. As a result, transitions through lexicon 250 are governed by rules established by orthography module 252 and morpheme combination module 254. The traversal through rule engine 22 provides efficient word analysis.

Although the present invention has been described with reference to particular embodiments, workers skilled in the art will recognize that changes may be made in form and detail without departing from the spirit and scope of the invention.

## Claims

1. A computer-implemented method of analyzing input text containing a plurality of transitions, the method comprising:
for each of the plurality of transitions in the input text:
comparing a transition in the input text with a transition in a rule engine; and
determining whether the transition in the input text is found in the rule engine based on a character found in a morpheme in the rule engine and at least one of the input text being associated with an inflected variation as a function of rules and a word boundary as a function of rules.

2. The computer implemented method of claim 1 wherein if it is determined that the transition in the input text is not found in a transition in the rule engine, than the method further comprises suggesting a possible transition in the rule engine and applying a cost to the possible transition.

3. The computer implemented method of claim 2 and further comprising calculating a total cost for all transitions in the input text not found in the rule engine.

4. The computer implemented method of claim 3 and further comprising if it is determined that the costs of the possible transition are too large, discarding the possible transition.

5. The computer implemented method of any of claims 1 to 4 and further comprising providing an indication that the transition in the input text is a word boundary.

6. The computer implemented method of any of claims 1 to 5 and further comprising if it is determined that the transition in the input text is found in a transition in the rule engine based on a word boundary, providing a morphological analysis of the input text.

7. The computer implemented method of any of claims 1 to 6 and further comprising providing an indication that the transition in the input text is a morpheme boundary.

8. The computer implemented method of any of claims 1 to 7 and further comprising providing an indication of spell checking analysis of the input text as a function of the step of determining.

9. A computer readable medium for analyzing input text containing a plurality of transitions, the computer readable medium including instructions which, when executed by a computer perform a method according to any of claims 1 to 8.

10. A system for processing words for word analysis of input text, comprising:
a lexicon for storing a plurality of free morphemes and bound morphemes;
an orthography rule module defining transformations of free morphemes to inflected variations; and
a morpheme combination module defining allowable combinations of the free morphemes and the bound morphemes and the inflected variations and the bound morphemes.

11. The system of claim 10 wherein the lexicon includes indications of word boundaries for the free morphemes and the allowable combinations of free morphemes and bound morphemes and inflected variations and bound morphemes.

12. The system of any of claims 10 to 11 wherein the lexicon includes indications of semantic information for each of the free morphemes and the allowable combination of free morphemes and bound morphemes and inflected variations and bound morphemes.

13. The system of any of claims 10 to 12 wherein the lexicon includes indications of syntactic information for each of the free morphemes and the allowable combination of free morphemes and bound morphemes and inflected variations and bound morphemes.

14. The system of any of claims 10 to 13 wherein the lexicon is stored in a trie structure and wherein the orthography rule module and the morpheme combination module define possible transitions within the trie structure.
